# EUROPÄISCHE PATENTSCHRIFT

(11) **EP 0 897 882 B1**
(45) Veröffentlichungstag und Bekanntmachung des Hinweises auf die Patenterteilung: **16.10.2002**
(21) Anmeldenummer: 98113773.0
(22) Anmeldetag: 23.07.1998
(51) Int. Cl.: B65G 39/09

(54) **Vorrichting zum Abdichten von Wälzlagern**
Device for sealing rollerbearings
Dispositif d'étanchéité pour paliers pour rouleaux

(30) Priorität: 16.08.1997 DE 19735536
(43) Veröffentlichungstag der Anmeldung: 24.02.1999
(73) Patentinhaber: Precismeca-Montan Gesellschaft für Fördertechnik mbH, 66280 Sulzbach (DE)
(72) Erfinder: Wolff, Werner, 66280 Sulzbach/Saar (DE)
(74) Vertreter: Radünz, Ingo, Dipl.-Ing.

(56) Entgegenhaltungen:
- DE-A- 3 027 157
- DE-U- 29 705 719
- FR-A- 1 407 613
- GB-A- 2 225 066

## Beschreibung

Die Erfindung betrifft eine Vorrichtung zum Abdichten von Wälzlagern, insbesondere für Förderbandrollen, mit den Merkmalen des Oberbegriffs des Patentanspruchs 1.

Aus der DE-OS 20 24 448 ist eine Vorrichtung zum Abdichten von Wälzlagern, insbesondere bei Förderbandrollen, bekannt, die aus zwei in axialer Richtung hintereinander angeordneten Spaltdichtungen mit dazwischen ausgebildeten Beruhigungs- und Fettkammern besteht. Dabei ist im wesentlichen der Einbau einer aus zwei Teilen bestehenden Labyrinthdichtung ausgeführt.

Die Erfahrung im praktischen Betrieb bei der bekannten Art von abgedichteten Wälzlagern hat gezeigt, daß die Laufzeit der Transportrollen wesentlich durch die Funktion des Dichtungssystems bestimmt wird. Das angegebene Dichtungssystem für Wälzlager arbeitet nicht zufriedenstellend und bedarf daher einer dringenden Verbesserung.

Weiter ist aus der DE-OS 24 21 379 eine Vorrichtung zum Abdichten von Wälzlagern, insbesondere für Transportbandrollen, bekannt, die aus mehreren in axialer Richtung hintereinander angeordneten Einzeldichtungen verschiedener Bauart besteht. Die Dichtwirkung dieser Vorrichtung wird insbesondere durch den zusätzlichen Einbau einer Lippendichtung erzielt. Die Lippendichtung hat sich zwar in der Praxis bewährt, aber selbst bei sorgfältiger Auswahl der Werkstoffe für die Lippendichtung führt diese Ausführung aufgrund der gegebenen Reibungskoeffizienten zu einer Schleifwirkung, die bei sehr langen Bandanlagen wegen des höheren Rollenwiderstandes einen nicht unerheblichen Mehrverbrauch an Antriebsenergie zur Folge hat.

Weiterhin ist aus der DE 43 27 988 eine Förderbandrolle bekannt, bei der das Wälzlager durch einen in eine Ringnut der Rollenachse eingelegten Sprengring fixiert und durch eine zweiteilige Labyrinthdichtung abgedichtet ist, die eine Abschlußkappe übergreift. Dabei ist die Labyrinthdichtung mit einer ringförmigen Ausnehmung versehen, in der der Sprengring gehalten ist.

Ein weiterer Nachteil der bisher bekannten Dichtsysteme besteht darin, daß infolge von Temperaturschwankungen zwischen Tag und Nacht ein Luftaustausch zwischen der Außenluft und dem im Rollenkörper eingeschlossenen Luftvolumen erfolgt, was auch als sogenanntes Pumpen bezeichnet wird. Dieser Luftaustausch erfolgt über die Kugellager und die Dichtung und zieht damit Schmutz und Feuchtigkeit von außen in das Kugellager.

Außerdem ist nachteilig, daß bei ungünstiger Passung zwischen dem Innendurchmesser des Lagerhalters der Förderbandrolle und dem Außendurchmesser des Dichtsystems etwas Feuchtigkeit durch Kapillarwirkung an der Labyrinthdichtung vorbei in das Kugellager und damit in den Innenraum der Förderbandrolle gelangen kann.

Die Aufgabe der Erfindung besteht darin, ein Dichtsystem zu schaffen, daß das Eindringen von Feuchtigkeit von Außen in das Kugellager und damit in den Innenraum einer Förderbandrolle verhindert und gleichwohl einen Luftaustausch zwischen dem Innenraum der Rolle und der Außenluft ermöglicht, ohne jedoch die Laufreibungskraft der Rollen zu erhöhen.

Die Aufgabe wird bei einer gattungsgemäßen Vorrichtung durch die kennzeichnenden Merkmale des Patentanspruchs 1 gelöst. Eine vorteilhafte Ausgestaltung der Erfindung ist Gegenstand von Unteransprüchen.

Dabei ist als besonders vorteilhaft anzusehen, daß mehrere Luftkanäle durch Bohrungen im Ringflansch des mittleren Ringes des mehrfachen Labyrinths und ein Luftkanal durch eine Bohrung im Lagerhalter ausgebildet sind. In bevorzugter Ausgestaltung der Erfindung kann es weiterhin vorteilhaft sein, daß der äußere Ring und der mittlere Ring des Labyrinths jeweils mit einem nach außen weisenden Ringflansch ausgerüstet sind und daß die Ringflansche radial außen an der Abschlußkappe nicht schleifend anliegen.

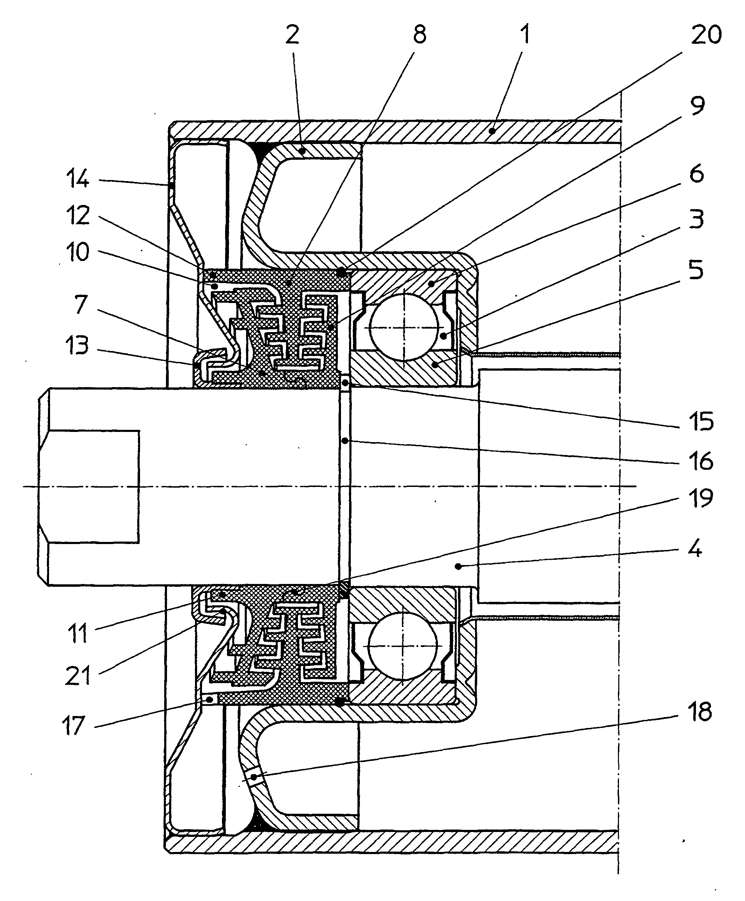

Weitere Vorteile der Erfindung sind anhand eines in der einzigen Zeichnung dargestellten Ausführungsbeispiels näher erläutert.

Die Zeichnung zeigt im vergrößerten Maßstab eine Seite einer Förderbandrolle im Schnitt mit dem erfindungsgemäßen Dichtsystem.

Eine Förderbandrolle, beispielsweise eine Tragrolle, besteht aus einem Rollenmantel 1, der an beiden Enden mit einem etwa Z-fömigen ausgebildeten Rollenboden oder Lagerhalter 2 fest verbunden ist. Dabei ist der Rollenmantel 1 über die Lagerhalter 2 mit Wälzlager 3 auf einer Rollenachse 4 gelagert. Das Wälzlager 3 weist einen Innenring 5 und einen Außenring 6 auf. Der Innenring 5 des Wälzlagers 3 ist mit Preßsitz auf die feststehende Rollenachse 4 geschoben. Der über den Lagerhalter 2 sich mit dem Rollenmantel 1 drehende Außenring 6 des Wälzlagers 3 ist in den Lagerhalter 2 ebenfalls eingepreßt.

Auf der Außenseite des Wälzlagers 3 ist ein Dichtsystem, vorzugsweise eine Labyrinthdichtung vorgesehen, die einen äußeren Ring 7 sowie einen mittleren Ring 8 und einen inneren Ring 9 enthält, wobei die einzelnen Ringe 7,9 durch eine Clipverbindung 19 zusammengehalten werden. Der äußere Ring 7 und der innere Ring 9 sind auf der Rollenachse 4 und der mittlere Ring 8 ist in dem Lagerhalter 2 durch Preßsitz befestigt. Der äußere Ring 7 und der innere Ring 9 weisen zu einander gerichtete Vorsprünge auf, die jeweils zahnartig in die Vorsprünge des mittleren Ringes 8 eingreifen und so eine labyrinthartige Dichtkammer 10 ausbilden.

Der äußere Ring 7 und der mittlere Ring 8 sind jeweils mit einem nach außen weisenden Ringflansch 11, 12 ausgerüstet, die beide radial außen an einer, vorteilhafterweise aus Metall bestehenden ringförmigen und im Querschnitt etwa Z-förmigen Abschlußkappe 14 nicht schleifend anliegen, die zwischen dem Rollenmantel 1 und dem äußeren Ring 7 angeordnet ist.

Zur weiteren Abdichtung der Dichtkammer 10, insbesondere bei einem Einsatz der Förderbandrolle in einer staubhaltigen Umgebung, kann eine ringförmige Staubkappe 13 vorgesehen sein. Die Staubkappe 13 ist im Querschnitt etwa U-förmig und greift von außen über einen nach außen weisenden Ringflansch 21 der Abschlußkappe 14 und von innen auf der Rollenachse 4 unter den Ringflansch 11 des äußeren Ringes 7 der Labyrinthdichtung.

Der mittlere Ring 8 der Labyrinthdichtung ist auf der dem Wälzlager 3 zugewandten Seite mit einer nicht dargestellten ringförmigen Ausnehmung versehen. In dieser ringförmigen Ausnehmung ist vorteilhafterweise ein O-Ring oder Simmerring 20 gelagert, der das Eindringen von Feuchtigkeit in das Wälzlager 3 durch Kapillarwirkung an der Labyrinthdichtung vorbei verhindert. Weiterhin ist auf der dem Wälzlager 3 zugewandten Seite an den inneren Ring 9 anliegend ein offener Sprengring 15 von quadratischem Querschnitt vorgesehen, der im eingebauten Zustand in eine Ringnut 16 auf der Rollenachse 4 eingreift. Auf diese Weise ist das Wälzlager 3 auf der Rollenachse 4 fixiert.

Im Ringflansch 12 des mittleren Ringes 8 sind mehrere Luftkanäle 17 durch Bohrungen angeordnet, die sich auf der Seite, die der Abschlußkappe 14 zugewandt sind, befinden. Darüber hinaus ist im Lagerhalter 2 ebenfalls ein Luftkanal 18 angebracht, der mit den Luftkanälen 17 kommuniziert, so daß ein Luftaustausch infolge von Temperaturschwankungen bei Tag und Nacht zwischen der Außenluft und dem vom Rollenmantel I eingeschlossenen Luftvolumen zwanglos erfolgt. Damit entfällt das sogenannte Pumpen oder der schädliche Luftaustausch über das Wälzlager 3 und die Labyrinthdichtung, so daß kein Schmutz und keine Feuchtigkeit von außen in das Wälzlager gelangt.

Der äußere Ring 7, der mittlere Ring 8 und der innere Ring 9 der Labyrinthdichtung mit dem angeordneten O-Ring oder Simmerring 20, die Abschlußkappe 14 sowie die vorgesehene Staubkappe 13 bilden eine vormontierte Baueinheit. Die vormontierte Baueinheit kann mit dem in den mittleren Ring 8 der Labyrinthdichtung eingesetzten O-Ring oder Simmerring 20 in einem Arbeitsgang auf die Rollenachse 4 geschoben werden, wodurch die Labyrinthdichtung in der Lage auf der Rollenachse 4 fixiert ist.

Beim Aufschieben der Baueinheit wird der Sprengring 15 ebenfalls ohne Verwendung eines Spezialwerkzeuges in die Ringnut 16 der Rollenachse gedrückt, so daß das Wälzlager 3 auf der Rollenachse fixiert ist.

## Patentansprüche

1. Vorrichtung zum Abdichten von Wälzlagern, insbesondere für eine Förderbandrolle, die einen Rollenmantel (1) umfaßt, der beidseitig über Lagerhalter (2) und Wälzlager (3) auf einer Rollenachse (4) geführt ist, die eine Ringnut (16) aufweist, in der ein Sprengring (15) eingelegt ist, der die Wälzlager auf der Rollenachse fixiert, auf der vor dem fixierenden Sprengring ein Dichtsystem aufgebracht ist, das aus einem mehrere Ringe (7, 8, 9) umfassenden mehrfachen Labyrinth besteht und das von einer Abschlußkappe (14) übergreifen ist, **dadurch gekennzeichnet, daß** der äußere und der innere Ring (7, 9) über eine Clipverbindung (19) in Eingriff stehen, daß Luftkanäle (17, 18) zwischen dem Innenraum der Förderbandrolle und der Außenluft ausgebildet sind und daß ein O-Ring oder Simmerring (20) zwischen dem Lagerhalter (2) und einem der einzelnen Ringe (7, 8, 9) angeordnet ist.

2. Vorrichtung nach Anspruch 1, **dadurch gekennzeichnet, daß** das mehrfache Labyrinth aus einem äußeren Ring (7), einem mittleren Ring (8) und einem inneren Ring (9) besteht und daß der äußere Ring (7) und der innere Ring (9) auf der Rollenachse (4) und der mittlere Ring (8) in dem Lagerhalter (2) durch Preßsitz gehalten sind.

3. Vorrichtung nach Anspruch 1 oder 2, **dadurch gekennzeichnet, daß** der äußere Ring (7) und der innere Ring (9) zu einander gerichtete Vorsprünge aufweisen, die jeweils zahnartig mit den Vorsprüngen des mittleren Ringes (8) in Eingriff stehen und daß die Ringe (7,8,9) eine labyrinthartige Dichtkammer (10) bilden.

4. Vorrichtung nach Anspruch 1, **dadurch gekennzeichnet, daß** der O-Ring oder Simmerring (20) zwischen dem Lagerhalter (2) und dem mittleren Ring (8) angeordnet ist.

5. Vorrichtung nach Anspruch 1, **dadurch gekennzeichnet, daß** mehrere Luftkanäle (17) durch Bohrungen im Ringflansch (12) des mittleren Ringes (8) des mehrfachen Labyrinths und ein Luftkanal (18) durch eine Bohrung im Lagerhalter (2) ausgebildet sind.

6. Vorrichtung nach Anspruch 1, **dadurch gekennzeichnet, daß** die Abschlußkappe (14) zwischen dem Rollenmantel (1) und dem äußeren Ring (7) angeordnet ist.

7. Vorrichtung nach Anspruch 1, **dadurch gekennzeichnet, daß** der äußere Ring (7) und der mittlere Ring (8) des Labyrinths jeweils mit einem nach außen weisenden Ringflansch (11,12) ausgerüstet sind und daß die Ringflansche (11,12) radial außen an der Abschlußkappe (14) nicht schleifend anliegen.

## Claims

1. Device for sealing roller bearings, particularly for a conveyor belt roller, comprising a roller shell (1) guided at both ends by way of bearing holders (2) and roller bearings (3) on a roller axle (4) having an annular groove (16) in which a spring ring (15), which fixes the roller bearing on the roller axle, is inserted, on which axle in front of the fixing spring ring is mounted a sealing system which consists of a multiple labyrinth comprising several rings (7, 8, 9) and which is engaged over by a closure cap (14), **characterised in that** the outer and the inner rings (7, 9) are disposed in engagement by way of a clip connection (19), that air channels (17, 18) are formed between the interior of the conveyor belt roller and the ambient air and that an O-ring or radial packing ring (20) is arranged between the bearing holder (2) and one of the individual rings (7, 8, 9).

2. Device according to claim 1, **characterised in that** the multiple labyrinth consists of an outer ring (7), a middle ring (8) and an inner ring (9) and that the outer ring (7) and the inner ring (9) are retained on the roller axle (4) by press fitting and the middle ring (8) is retained in the bearing holder (2) by press fitting.

3. Device according to claim 1 or 2, **characterised in that** the outer ring (7) and the inner ring (9) have projections which are oriented towards one another and which are respectively disposed in engagement in toothlike manner with the projections of the middle ring (8) and that the rings (7, 8, 9) form a labyrinth-like sealing chamber (10).

4. Device according to claim 1, **characterised in that** the O-ring or radial packing ring (20) is arranged between the bearing holder (2) and the middle ring (8).

5. Device according to claim 1, **characterised in that** several air channels (17) are formed by bores in the annular flange (12) of the middle ring (8) of the multiple labyrinth and an air channel (18) is formed by a bore in the bearing holder (2).

6. Device according to claim 1, **characterised in that** the closure cap (14) is arranged between the roller shell (1) and the outer ring (7).

7. Device according to claim 1, **characterised in that** the outer ring (7) and the middle ring (8) of the labyrinth are each equipped with a respective outwardly directed annular flange (11, 12) and that the annular flanges (11, 12) bear in a non-sliding manner radially externally against the closure cap (14).

## Revendications

1. Dispositif pour étanchéifier des paliers à roulements, en particulier pour un rouleau de convoyeur à bande qui comprend une enveloppe (1) guidée de part et d'autre par l'intermédiaire d'un support de palier (2) et d'un palier à roulement (3) sur un axe de rouleau (4) qui présente une rainure annulaire (16) dans laquelle est insérée une bague d'arrêt ressort (15) qui fixe les paliers à roulements sur l'axe de rouleau, sur lequel est mis en place avant la bague d'arrêt ressort de fixation un système d'étanchéité qui est formé d'un labyrinthe multiple comprenant plusieurs bagues (7, 8, 9) et qui est recouvert par un capuchon de fermeture (14), **caractérisé en ce que** la bague extérieure et la bague intérieure (7, 9) sont en prise par l'intermédiair dune liaison par agrafe (19), que des conduits d'air (17, 18) sont réalisés entre l'espace intérieur du rouleau de convoyeur à bande et l'air extérieur et qu'un joint torique ou une bague à lèvres à ressort (20) est disposé entre le support de palier (2) et l'une des bagues individuelles (7, 8, 9).

2. Dispositif suivant la revendication 1, **caractérisé en ce que** le labyrinthe multiple se compose d'une bague extérieure (7), d'une bague centrale (8) et d'une bague intérieure (9) et que la bague extérieure (7) et la bague intérieure (9) sont maintenues par ajustement serré sur l'axe de rouleau (4), la bague centrale (8) étant maintenue par ajustement serré dans le support de palier (2).

3. Dispositif suivant Tune des revendications 1 et 2, **caractérisé en ce que** la bagué extérieure (7) et la bague intérieure (9) présentent des saillies dirigées les unes vers les autres, qui sont en prise chacune à la manière de dents avec les saillies de la bague centrale (8), et que les bagues (7, 8, 9) forment un compartiment d'étanchéité (10) de type labyrinthe.

4. Dispositif suivant la revendication 1, **caractérisé en ce que** le joint torique ou la bague à lèvres à ressort (20) est disposé entre le support de palier (2) et la bague centrale (8).

5. Dispositif suivant la revendication 1, **caractérisé en ce que** plusieurs conduits d'air (17) sont réalisés par des alésages dans la bride annulaire (12) de la bague centrale (8) du labyrinthe multiple, et qu'un conduit d'air (18) est réalisé par un alésage dans le support de palier (2).

6. Dispositif suivant la revendication 1, **caractérisé en ce que** le capuchon de fermeture (14) est disposé entre l'enveloppe de rouleau (1) et la bague extérieure (7).

7. Dispositif suivant la revendication 1, **caractérisé en ce que** la bague extérieure (7) et la bague centrale (8) du labyrinthe sont équipées chacune dune bride annulaire (11, 12) orientée vers l'extérieur et que les brides annulaires (11, 12) s'appliquent sans frottement radialement à l'extérieur sur le capuchon de fermeture (14).
